Europäisches Patentamt

European Patent Office

Office européen des brevets

(19)

(11) Numéro de publication: **0 099 832**

**B1**

(12) **FASCICULE DE BREVET EUROPEEN**

(45) Date de publication du fascicule du brevet: **14.03.90**

(51) Int. Cl.⁵: **G 01 S 7/295,** G 01 S 7/04

(21) Numéro de dépôt: **83401482.1**

(22) Date de dépôt: **19.07.83**

(54) **Procédé de traitement des signaux vidéo dans un transformateur numérique d'images, et dispositif de mise en oeuvre de ce procédé.**

(30) Priorité: **20.07.82 FR 8212651**

(43) Date de publication de la demande:
**01.02.84 Bulletin 84/05**

(45) Mention de la délivrance du brevet:
**14.03.90 Bulletin 90/11**

(84) Etats contractants désignés:
**DE GB IT NL SE**

(56) Documents cités:
**EP-A-0 038 102**
**FR-A-2 254 796**
**FR-A-2 459 486**
**GB-A-2 052 910**
**GB-A-2 067 869**

(73) Titulaire: **THOMSON-CSF**
**51, Esplanade du Général de Gaulle**
**F-92800 Puteaux (FR)**

(72) Inventeur: **Lachaize, Christian**
**THOMPSON-CSF SCPI 173, bld Haussmann**
**F-75379 Paris Cedex 08 (FR)**
Inventeur: **Andrieu, Jean-Pierre**
**THOMPSON-CSF SCPI 173, bld Haussmann**
**F-75379 Paris Cedex 08 (FR)**
Inventeur: **Chagny, Christian**
**THOMPSON-CSF SCPI 173, bld Haussmann**
**F-75379 Paris Cedex 08 (FR)**

(74) Mandataire: **Benoit, Monique et al**
**THOMSON-CSF SCPI**
**F-92045 PARIS LA DEFENSE CEDEX 67 (FR)**

Courier Press, Leamington Spa, England.

## Description

La présente invention concerne un procédé de traitement des signaux vidéo dans un transformateur numérique d'images et plus particulièrement un traitement effectué dans le but d'améliorer la qualité des informations visualisées sur un moniteur de télévision contrôlé par un transformateur d'images. Ces informations peuvent être des informations radar. Ce peuvent être également des informations provenant d'un sonar, de senseurs infra-rouge, de systèmes d'échographie, que l'on veut visualiser sur des écrans fonctionnant en mode télévision. L'invention concerne également un dispositif de mise en oeuvre d'un tel procédé.

Suivant l'art antérieur, les transformateurs d'images utilisaient tout d'abord des tubes à mémoire comprenant généralement deux canons, un canon d'écriture commandé en balayage radar et un canon lecture commandé en balayage télévision. Apparurent ensuite les transformateurs numériques d'images ou TDI pour "transformateur digital d'images" qui utilisent des circuits numériques.

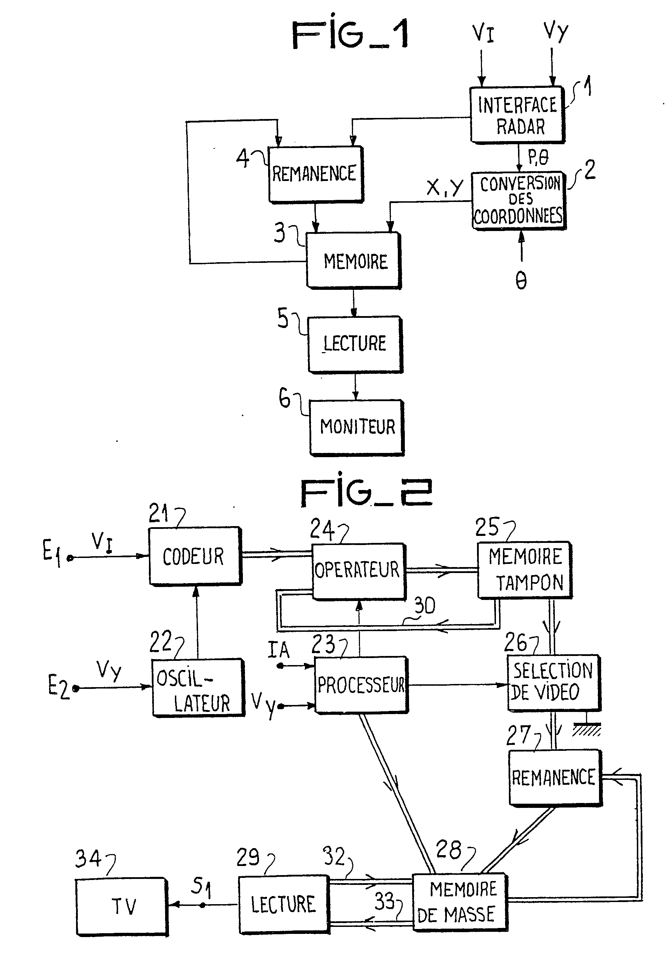

La figure 1 donne une représentation schématique d'un transformateur numérique d'images auquel la présente invention s'applique. Cette représentation comprend essentiellement un circuit 1 dit d'interface radar qui reçoit les signaux vidéo radar VI cojointement avec les signaux de synchronisation VY, un circuit 2 de conversion des coordonnées, ρ, θ, de la vidéo radar en XY, représentation cartésienne sur l'écran de télévision. Les circuits 1 et 2 sont connectés à une mémoire numérique 3 à accès aléatoire (RAM). Un circuit dit de rémanence 4 est interposé entre l'interface radar 1 et la mémoire 3, qui est connectée à un circuit 5 dit de visualisation et lecture mémoire. Le moniteur de télévision 6 est connecté au circuit 5.

Les fonctions des différents circuits d'un TDI qui ont été donnés ci-dessus sont les suivantes:

— Le circuit d'interface 1 échantillonne et met sous forme numérique les signaux vidéo qui lui sont appliqués. Il peut comprendre un circuit de compression vidéo permettant l'acquisition en temps réel d'une radiale radar, c'est-à-dire l'acquisition des signaux vidéo reçus par le radar après émission par celui-ci d'une impulsion de synchronisation pour un angle défini de l'antenne en rotation par rapport à une origine déterminée, et la lecture de ces signaux vidéo, en temps différé et à une vitesse différente, ceci pour s'adapter aux temps d'accès dans la mémoire d'image 3.

— Le circuit 2 de conversion des coordonnées polaires en coordonnées cartésiennes permet de calculer l'adresse de chaque élément d'image en coordonnées cartésiennes à partir des informations radar reçues en coordonnées polaires.

— La mémoire d'images 3 a une résolution adaptée au standard de télévision utilisé. Elle peut être par exemple de 1024 lignes de 1024 cases mémoire. A chaque case correspond un point de l'image à visualiser. La luminance de chaque point peut être codée par exemple à l'aide de 3 bits, autorisant huit niveaux de luminosité pour chaque point. Pour cette mémoire, les phases de lecture télévision et d'écriture radar sont asynchrones. Le lecture est prioritaire et pendant une phase de lecture, la conversion est arrêtée.

— Le circuit 5 de visualisation effectue les opérations suivantes:

— génération des signaux de synchronisation télévision;

— lecture simultanée de plusieurs points dans la mémoire image de manière à respecter les temps d'accès des circuits utilisés et de permettre l'écriture dans cette même mémoire;

— conversion numérique-analogique des informations de luminosité lues dans la mémoire image pour générer un signal vidéo-télévision analogique destiné ou moniteur télévision associé sur lequel apparissent les informations visualisées.

— Le circuit de rémanence 4 a pour rôle de restituer pour des informations données en numérique, pour lesquelles la rémanence n'existe pas, un effet de rémanence comparable à celui qui est produit sur un tube mémoire. Sur un tube mémoire en effet, la brillance d'un plot commence à baisser dès qu'il a été inscrit. Le circuit de rémanence 4 crée un effet semblable, toutefois avec un retard d'un tour d'antenne et une décroissance de niveau quantifiée à chaque tour.

Dans un transformateur numérique d'images, les informations radar visualisées doivent présenter une certaine qualité qui se traduit par certaines contraintes à respecter au niveau de la conversion des coordonnées et de la mise en mémoire. Une insuffisance de cette qualité entraîne une fluctuation de l'image visualisée.

De fait, l'écriture de la vidéo radar en mémoire après conversion des coordonnées doit permettre, pour la rémanence à introduire, un vieillissement correct des informations mémorisées. Pour respecter une loi de rémanence pré-établie, il est nécessaire d'adresser d'un tour d'antenne au suivant les mêmes cases mémoire, c'est-à-dire que la précision requise de la visualisation requiert qu'un point d'un signal vidéo, situé à une distance ρ de l'origine des coordonnées pour un angle θ de rotation de l'antenne, se trouve, après la conversion, toujours dans la même case mémoire. L'adressage d'un point de la mémoire est donné par la relation suivante:

$$X = \rho \cos \theta$$
$$Y = \rho \sin \theta$$

Deux sources d'imprécisions sont alors à noter, l'une portant sur le rayon vecteur ρ en distance, l'autre sur l'angle θ de rotation de l'antenne.

L'erreur dans la détermination de ρ est due à un déclage de la phase de l'horloge d'échantillonnage de la vidéo par rapport à la synchronisation du radar. L'erreur dans la détermination de l'angle θ est due à la façon dont le début de la conversion est fait. Ce manque de précision dans la détermination de ρ et θ entraîne des erreurs sur les mesures de télémétrie.

De plus, on notera que l'écriture de la vidéo dans la mémoire après conversion des coordonnées doit être faite de façon à minimiser le nombre des radiales converties par tour d'antenne. La limitation du nombre des radiales converties au nombre des incréments d'angle par tour permet une augmentation corrélative de la vitesse de rotation de l'antenne du radar admissible par le transformateur d'images.

Pour obtenir cette qualité des images visualisées et cette précision dans la détermination de la distance et de l'angle de rotation de l'antenne, quelques moyens ont été proposés dans l'art antérieur.

On a proposé par exemple d'utiliser un oscillateur libre pour échantillonner la vidéo, mais on a introduit de ce fait une erreur sur la distance.

On a proposé, pour résoudre le problème de la rémanence et du nombre des radiales converties, d'effectuer les conversions sur les incréments d'angle. A cet effet, on inscrit la vidéo dans une mémoire parmi deux. A chaque incrément d'angle, on change de mémoire et on convertit l'information contenue dans l'autre mémoire. Dans ce cas cependant, pour un angle donné, on risque de convertir des signaux vidéo appartenant à plusieurs radiale adjacentes. En effet, en général, l'émission de l'impulsion de synchronisation du radar et la rotation de son antenne sont parfaitement asynchrones d'un tour d'antenne à l'autre pour un angle donné et, dans ces conditions, les morceaux de radiales converties ne sont pas les mêmes. Ceci entraîne une perte d'information lorsque la fréquence de répétion est supérieure à la résolution du codeur d'antenne.

Pour un point d'une carte électronique générée en balayage polaire, l'erreur de position en angle $\theta$ est d'un incrément d'angle ($\Delta\theta$). Un point vidéo sur une telle carte est calculé à partir de la valeur d'angle au moment de l'émission de l'impulsion de synchronisation. Une erreur d'incrément d'angle entraîne par conséquent une erreur de positionnement au niveau des cellules mémoire. L'erreur maximale est obtenue par l'excentrement le plus important et la distance D d'erreur est donnée par $D = \rho.\Delta\theta$ et $Dmax = \rho\ max. (\Delta\theta)$. Par excentrement on entend la distance entre le centre du radar donné par l'antenne et le centre de l'écran de visualisation choisi par l'opérateur.

On montre que pour un transformateur ayant comme définition 1024 lignes X 1024 points, l'erreur d'angle peut atteindre quatre points, et l'erreur en distance d'un point, ce qui rend la visualisation d'une carte, générée en coordonnées polaires, de mauvaise qualité et réduit la précision des mesures de télémétrie que l'on effectue.

Le document FR—A—2 459 486 décrit un procédé et un dispositif d'affichage de signaux de localisation par réflexion d'onde qui comporte un générateur unique assurant la commande de l'émetteur d'ondes et fournissant les signaux d'échantillonnage des signaux reçus après réflexion.

L'invention a alors pour but de définir pour un transformateur numérique d'images, les conditions et les moyens permettant de résoudre simultanément les contraintes que l'art antérieur ne résoud que partiellement, c'est-à-dire:
— avoir une organisation d'écriture assurant une rémanence constante pour chaque plot quelle que soit sa position sur l'écran;
— garantir une erreur plafond d'une cellule mémoire pour chaque point vidéo défini en coordonnées polaires;
— ne pas convertir plus de radiales que la résolution du codeur d'antenne ne l'exige, pour améliorer la vitesse de rotation admissible par le transformateur et le rendre indépendant du nombre d'émission radar par tour d'antenne.

Plus précisément, l'invention a pour objet un procédé de traitement de signaux vidéo dans un transformateur numérique d'image, tel que défini par la revendication 1, ainsi que sont dispositif de mise en oeuvre, tel que défini par les revendications 2 à 5.

D'autres avantages et caractéristiques de l'invention apparaîtront dans la description qui suit d'un exemple de réalisation donné à l'aide des figures qui représentent:
— la figure 1, un diagramme schématique d'un transformateur d'images auquel s'applique l'invention et
— la figure 2, un diagramme schématique d'un dispositif de mise en oeuvre du procédé de traitement des signaux vidéo dans un transformateur numérique d'image, conformément à l'invention.

Dans l'introduction, on a fait ressortir les caractéristiques qui déterminent la qualité et la précision des informations radar visualisées après qu'ait eu lieu la conversion des coordonnées polaires en coordonnées cartésiennes pour la lecture des informations sur un écran de télévision.

L'écriture de la vidéo dans la mémoire numérique du transformateur d'images, après conversion des coordonnées, est telle qu'elle doit permettre un vieillissement correct des informations inscrites et il faut de plus prévoir des moyens pour que d'un tour d'antenne au suivant, les mêmes cases mémoire soient adressées, ceci dépendant de la précision avec laquelle la distance $\rho$, ou rayon vecteur d'un point en coordonnées polaires et son angle $\theta$ sont déterminées.

La figure 2 représente de façon schématique, un dispositif de mise en oeuvre du procédé de traitement des signaux vidéo dans un transformateur numérique, conforme aux caractéristiques de l'invention.

A titre d'exemple non limitatif, ce dispositif traite des informations radar.

Un tel dispositif de mise en oeuvre du procédé de traitement selon l'invention comprend un codeur 21 recevant de l'entrée E1 les signaux vidéo VI du radar associé, un oscillateur 22, recevant de l'entrée E2 les signaux de synchronisation VY du radar, un opérateur ou processeur 23 effectuant la conversion des coordonnées polaire des informations radar en coordonnées cartésiennes pour être affichables sur un écran de moniteur de télévision 34. Ce processuer 23 reçoit les informations suivantes: informations d'angle IA, par exemple sous la forme d'impulsions incluant l'inormation de Nord, et la synchro radar Vy. Le dispositif de traitement comprend, en outre, un opérateur 24 connecté au processeur 23 et à une mémoire tampon 25, un dispositif de sélection de vidéo 26, un opérateur 27 dit de rémanence, une mémoire de masse 28 et un dispositif de lecture 29 de télévision délivrant sur la sortie S1 du dispositif de traitement en coordonnées cartésiennes, les infromations vidéo radar appliquées à l'entrée en coordonnées polaires, informations que l'on applique à un moniteur de télévision 34.

Le fonctionnement d'un tel dispositif de traitement des signaux d'images dans un TDI est le suivbant.

Les informations vidéo radar délivrées en E1 par le récepteur du radar sont exprimées en coordonnées polaires et sont appliquées au codeur 21 qui reçoit la fréquence d'échantillonnage qui va permettre d'échantillonner la vidéo radar puis la quantifier, ce de façon connue de l'homme de l'art. Cette fréquence d'échantillonnage est délivrée par un oscillateur 22 asservi en phase sur les impulsions de synchronisation Vy du radar qui sont appliquées à l'entrée E2 du dispositif. Cet asservissement, qui constitue une des caractéristiques de l'invention, permet, comme cela a été expliqué précédemment de supprimer les erreurs en distance qui pouvaient être faites dans la determination de la distance p d'une cible détectée par le radar. On peut noter qu'un tel oscillateur 22 est fonctionnellement identique à l'oscillateur de référence du dispositif d'élimination des échos fixes, ou MTI, existant dans le radar associé. Pendant l'opération de codage en distance de la vidéo radar, on procède, pour la radiale précédente enregistrée dans la mémoire tampon 25, à la conversion des coordonnées polaires, en coordonnées cartésiennes. Cette conversion est effectuée dans le processeur 23 qui reçoit, comme indiqué ci-dessus, l'angle de rotation (IA) de l'antenne du radar, et les impulsions de synchronisation Vy du radar. De cette façon, les radiales sont converties pour la valeur d'angle de rotation définie à l'instant d'émission de l'impulsion de synchronisation correspondante.

Comme cela a été expliqué dans l'introduction, cet asservissement sur les impulsions de synchronisation de l'échantillonnage distance d'une part et du tracé des radiales d'autre part, pour la valeur d'angle correspondante, permet de pallier le manque de synchronisme existant généralement entre l'émission des impulsions de synchronisation et la rotation de l'antenne dans un radar, manque de synchronisme qui détermine le manque de précision dans la visualisation et en détériore la qualité.

Cette absence de synchronisme peut provoquer la situation dans laquelle il y a émission de deux impulsions de synchronisation radar pour une même valeur d'angle de l'antenne, définissant ainsi deux radiales pour cet angle. Dans ce cas, on procède à ce que l'on appelle un regroupement, consistant à ne tracer qu'une seule radiale mais qui est une combinaison des informations quantifiées des deux radiales précendetes. Cette opération est faite dans l'opérateur 24 associé à la mémoire tampon 25, sous le contrôle du processeur 23. La première radiale considérée est enregistrée dans la mémoire tampon 25 qui est connectée par une boucle de retour 30 à l'opérateur 24. Lorsque la seconde radiale survient pour laquelle aucune modification de l'angle n'a été détectée, l'opérateur 24, sur la commande du processeur 23, procède à la combinaison des informations portées par les deux radiales de sorte qu'une seule radiale pour la seule valeur d'angle définie sera convertie par le processeur 23 avec comme informations, le maximum des informations des deux radiales considérées. La mémoire tampon 25 assure donc la mémorisation d'une radiale, éventuellement regroupée avec la ou les radiales précédentes, ainsi que la mémorisation de la radiale précédente (ou du regroupement de radiales précédent), à la disposition du processeur 23.

Cette absence de synchronisme peut provoquer une autre situation gênante au niveau de la rémanence. En effet, il peut y avoir des valeur d'angle non couvertes par des émissions radar. Dans ce cas, dans un transformateur numérique d'images, l'opération de rémanence ne s'effectue plus dans de bonnes conditions. De fait, celle-ci a lieu généralement une fois par tour et consiste à comparer la vidéo incidente à la vidéo existante; il est donc nécessaire pour effectuer cette comparaison, et ainsi faire "vieillir" l'information, de tracer les radiales correspondant à tous les angles, c'est ce qui est fait suivant l'invention, mais avec une vidéo nulle. Cette opération d'inscription d'une radiale dite fictive a lieu grâce au dispositif 26 qui impose une vidéo nulle, sous la commande du processeur 23 qui constate qu'une des valeurs d'angle n'a pas été adressée par une information vidéo dans un tour d'antenne. Dans ces conditions, il est possible de procéder à l'opération de rémanence qui est faite une fois par tour d'antenne sur toutes les radiales réelles et fictives qui ont été inscrites, ces radiales correspondant au nombre des valeurs d'angles ou incréments qui sont considérées. Cette limitation du nombre des radiales converties au mombre d'incréments d'angle par tour, permet, comme cela a déjà été dit, d'augmenter la vitesse de rotation admissible par le transformateur d'images, vitesse qui est d'ailleurs une des caractéristiques du transformateur.

Quand les opérations précédentes sont effectuées, la mémoire de masse 28, connectée au processeur de conversion de coordonnées 23 et à l'opérateur 27 de rémanence, enregistre les niveaux vidéo des différents quanta des radiales correspondant à des points de l'écran aux adresses données par le processeur 23. Le dispositif de lecture 29 de télévision lit la mémoire de masse 28 par adresse par la liaison 32, les informations en coordonnées cartésiennes à afficher étant transmises par la liaison 33. La vidéo dite télévision apparaît sur la sortie S1 qui est connectée au moniteur de télévision 34.

**Revendications**

1. Procédé de traitement d'information vidéo dans un transformateur numérique d'images, ladite information étant fournie par l'antenne d'un radar en coordonnées polaires et formée par une succession de radiales, chacune des radiales étant constituée par l'information vidéo reçue par le radar après émission par celui-ci d'une impulsion dite impulsion radar, le transformateur comportant:

— un convertisseur analogique-numérique (21) recevant l'information vidéo, l'échantillonnant et la numérisant sur réception d'un signal d'échantillonnage périodique, en phase avec les impulsions radar;

— une mémoire image (28), mémorisant en coordonnées cartésiennes l'information vidéo numérisée et traitée, et la fournissant à des moyens (34) d'affichage de type télévision;

— des moyens (23) de conversion de coordonnées polaires en coordonnées cartésiennes, recevant des informations angulaires (IA) discrètes de position de l'antenne et des impulsions de synchronisation ($V_Y$) synchrones des impulsions radar, et assurant l'adressage de la mémoire image;

— des moyens (27) assurant a rémanence de l'information mémorisée dans la mémoire image; le procédé étant caractérisé par le fait qu'il comporte une étape de regroupement des radiales lorsqu'elles correspondent à une même valeur de l'information angulaire de position de l'antenne; qu'il comporte une étape de conversion des coordonnées des points de chaque radiale, après regroupement, avec pour valeur de l'information angulaire, celle qui est définie à l'instant de l'impulsion de synchronisation correspondante, et qu'il comporte, une étape de création d'une radiale fictive caractérisée par une information vidéo nulle, lorsqu'aucune radiale n'est disponible pour une valeur donnée de l'information angulaire de position de l'antenne.

2. Dispositif de mise en oeuvre du procédé de traitement d'information vidéo dans un transformateur numérique d'images suivant la revendication 1, ledit transformateur comportant:

— un convertisseur analogique-numérique (21) recevant l'information vidéo, l'échantillonnant et la numérisant sur réception d'un signal d'échantillonnage périodique, en phase avec les impulsions radar;

— une mémoire image (28), mémoirsant en coordonnées cartésiennes l'information vidéo numérisée et traitée, et la fournissant à des moyens (34) d'affichage de type télévision;

— des moyens (23) de conversion de coordonnées polaires en coordonnées cartésiennes, recevant des informations angulaires (IA) discrètes de position de l'antenne et des impulsions de synchronisation ($V_Y$) synchrones des impulsions radar, et assurant l'adressage de la mémoire image;

— des moyens (27) assurant la rémanence de l'information mémorisée dans la mémoire image; ledit dispositif étant caractérisé par le fait qu'il comporte en outre un opérateur (24) de regroupment de radiales et un dispositif (26) de création d'une radiale fictive, l'opérateur (24) et le dispositif de création (26) étant commandés par lesdits moyens (23) de conversion de coordonnées.

3. Dispositif de mise en oeuvre du procédé selon la revendication 2, caractérisé par le fait qu'il comporte une mémoire tampon (25), reliée à la sortie de l'opérateur de regroupement (24) et rebouclée sur son entrée.

4. Dispositif selon la revendication 3, caractérisé par le fait que ledit dispositif (26) de création d'une radiale fictive est inséré en sortie de la mémoire tampon (25).

5. Dispositif selon la revendication 2, caractérisé par le fait qu'il comporte un générateur autonome (22) de fréquence d'échantillonnage dont la sortie est asservie en phase sur les impulsions de synchronisation ($V_Y$).

**Patentansprüche**

1. Verfahren zur Verarbeitung von Videoinformationen in einem digitalen Bildwandler, wobei die Informationen durch eine Radarentenne in Polarkoordinaten und in Form einer Folge von Radialstrahlen geliefert werden und jeder radialstrahl aus den vom Radar nach Aussenden eines Radarimpuls genannten Impulses empfangenen Bildinformationen besteht und wobei der Wandler folgende Komponenten aufweist:

— einen Analog-Digital-Wandler (21), welcher die Videoinformationen empfängt, sie abtastet und bei Empfang eines periodischen Abtastsignals in Phase mit den Radarimpulsen digitalisiert,

— einen Bildspeicher (28), welcher die digitalisierten und verarbeiteten Bildinformationen in kartesischen Koordinaten speichert und an Wiedergabemittel (34) vom Typ eines Fernsehgerätes liefert,

— Mittel (23) zur Umwandlung von Polarkoordinaten in kartesische Koordinaten, welche diskrete Informationen (IA) über die Winkelposition der Antenne und mit den Radarimpulsen synchron Synchronisierungsimpulse ($V_Y$) empfängt und die Adressierung des Bildspeichers besorgt, und

— Mittel (27) zur Gewährleistung der Beständigkeit der im Bildspeicher gespeicherten Informationen, dadurch gekennzeichnet, daß das Verfahren einen Schritt zur Gruppierung der Radialstrahlen aufweist, wenn sie dem gleichen Winkelpositionsinformationswert der Antenne entsprechen, daß es nach der Gruppierung einen Schritt zur Umwandlung der Koordinaten der Punkte jedes Radialstrahls aufweist, wobei als Wert der Winkelinformation jener genommen wird, der im Zweitpunkt des entsprechenden Synchronisierungsimpulses definiert ist, und daß es einen Schritt zur Erzeugung eines fiktiven Radialstrahls aufweist, der durch eine Videoinformation null gekennzeichnet ist, wenn für einen gegebenen Winkelpositionsinformationswert der Antenne kein Radialstrahl zur Verfügung steht.

2. Vorrichtung zur Durchführung des Verfahrens zur Verarbeitung von Videoinformationen in einem digitalen Bildwandler nach Anspruch 1, wobei der Wandler folgende Komponenten aufweist:

— einen Analog-Digital-Wandler (21), welcher die Videoinformationen empfängt, sie abtastet und bei Empfang eines periodischen Abtastsignals in Phase mit den Radarimpulsen digitalisiert,

— einen Bildspeicher (28), welcher die digitalisierten und verarbeiteten Bildinformationen in kartesischen Koordinaten speichert und an Wiedergabemittel (34) von Typ eines Fensehgerätes liefert,

— Mittel (23) zur Umwandlung von Polarkoordinaten in kartesische Koordinaten, welche diskrete Informationen (IA) über die Winkelposition (IA) der Antenne und mit den Radarimpulsen synchron Synchronisierungsimpulse ($V_Y$) empfängt und die Adressierung des Bildspeichers besorgt, und

— Mittel (27) zur Gewährleistung der Beständigkeit der im Bildspeicher gespeicherten Informationen,

dadurch gekennzeichnet, daß die Vorrichtung weiter eine Operationsschaltung (24) zur Gruppierung der Radialstrahlen und eine Vorrichtung (26) zur Erzeugung eines fiktiven Radialstrahls aufweist, wobei die Operationsschaltung (24) und die Erzeugungsvorrichtung (26) von den Koordinatenumwandlungsmitteln (23) gesteuert werden.

3. Vorrichtung zur Durchführung des Verfahrens nach Anspurch 2, dadurch gekennzeichnet, daß sie einen Pufferspeicher (25) besitzt, der an den Ausgang des Gruppierungsoperators (24) angeschlossen ist und an seinen Eingang rückgeschleift ist.

4. Vorrichtung nach Anspruch 3, dadurch gekennzeichnet, daß die Vorrichtung (26) zur Erzeugung eines fiktiven Radialstrahls am Ausgang des Pufferspeichers (25) eingefügt ist.

5. Vorrichtung nach Anspruch 2, dadurch gekennzeichnet, daß sie einen autonomen Abtastfrequenzgenerator (22) besitzt, dessen Ausgang phasenmäßig gemäß den Synchronisierungsimpulsen ($V_Y$) geregelt wird.

## Claims

1. A method for processing video information in a digital image converter, said information being provided by a radar antenna defined in the form of polar coordinates and constituted by a succession of radial beams, with each of the radial beams being constituted by the video information received by the radar device after having transmitted a radar pulse, the converter comprising:

— an analog-to-digital converter (21) adapted to receive the video information, to sample it and to digitalize it upon reception of a periodic sampling signal in phase with the radar pulses,

— an image storage (28) adapted to store the digitalized and processed video information in the form of Cartesian coordinates, and to deliver it to display means (34) such as a television set,

— means (23) for converting polar coordinates into Cartesian coordinates adapted to receive discrete angular antenna position information (IA) and synchronization pulses ($V_Y$) synchronous with the radar pulses, and to ensure the addressing of the image storage;

— means (27) for ensuring the remanence of the stored information in the image storage;

characterized in that it comprises a step of grouping radial beams when they correspond to a same value of angular antenna position information, that it comprises after grouping a step of converting the coordinates of the points of each radial beam, taking as angular information value the one defined at the instant of the corresponding synchronization pulse, and that it comprises a step of creating a fictitious radial beam which is characterized by having null video information, when no radial beam is available for a given value of angular antenna position information.

2. A device for implementing the method of processing video information in a digital image converter according to claim 1, said converter comprising:

— an analog-to-digital converter (21) adapted to receive the video information, to sample it and to digitalize it upon reception of a periodic sampling signal in phase with the radar pulses,

— an image storage (28) adapted to store the digitalized and processed video information in the form of Cartesian coordinates, and to deliver it to display means (34) such as a television set,

— means (23) for converting polar coordinates into Cartesian coordinates adapted to receive discrete angular antenna position information (IA) and synchronization pulses ($V_Y$) synchronous with the radar pulses, and to ensure the addressing of the image storage;

characterized in that it further comprises an operator unit (24) for grouping radial beams and a device (26) for creating a fictitious radial beam, the operator unit (24) and the creating device (26) being controlled by said means (23) for converting coordinates.

3. A device for implementing the method according to claim 2, characterized in that it comprises a buffer storage (25) which is connected to the output of the grouping operator unit (24) and which fed back to its input.

4. A device according to claim 3, characterized in that said device (26) for creating a fictitious radial beam is inserted at the output of the buffer storage (25).

5. A device according to claim 2, characterized in that it comprises an autonomous sampling frequency generator (22), whose output is phase-locked to the synchronization pulses ($V_Y$).

# FIG_1

# FIG_2